# EUROPÄISCHE PATENTANMELDUNG

(11) **EP 1 106 266 A2**
(43) Veröffentlichungstag der Anmeldung: **13.06.2001**
(21) Anmeldenummer: 00125310.3
(22) Anmeldetag: 28.11.2000
(51) Int. Cl.: B07C 3/08

(54) **Vorrichtung zum versandfertigen Sortieren von Waren**

(30) Priorität: 01.12.1999 DE 19957814
(71) Anmelder: Applimont GmnH Software, 86356 Neusäss (DE)
(72) Erfinder: Werner, Walter Dipl.Math.Dr., 86364 Neusäss (DE)
(74) Vertreter: Strasse, Joachim, Dipl.-Ing.

(57) **Zusammenfassung**

Die Patentanmeldung beschreibt eine Vorrichtung zum Sortieren und Zusammenstellen von markierten Einzelartikeln in versandfertige Einheiten mittels einer linearen endlosen umlaufenden Folge (12) von mit ihrer Auflageseite oben bleibenden Einzelpaletten. Um Platz zu sparen werden beide übereinanderliegende und gegenläufigen Ebenen (14,16) genutzt. In beiden Ebenen befinden sich auf beiden Seiten Abgabestationen (26), in welche die Einzelartikel von den Einzelpaletten abgegeben werden. An jeder Abgabestation (26) befindet sich ein Signalgeber, der ein Signal an die vorbeibewegte Einzelpalette gibt. Daraufhin wird ein auf einem auf jeder Einzelpalette angeordneten endlosen Band aufliegender Einzelartikel durch eine Querbewegung des Bandes abgegeben.

## Beschreibung

Die vorliegende Erfindung bezieht sich auf eine Vorrichtung zum Sortieren und Zusammenstellen von markierten Einzelartikeln in versandfertige Einheiten.

Es sind verschiedene Verfahren und Einrichtungen zum Sortieren von Postgut nach dem Bestimmungsort oder von verschiedenen Waren, die an einen Empfänger bestimmt sind, bekannt. Man unterscheidet hierbei zwischen karussellartigen Verteilmaschinen mit einem runden Aufbau und länglichen Vorrichtungen, die mit Förderbändern arbeiten. Bei beiden Arten ist der Flächenbedarf relativ zur Kapazität groß. Insbesondere linear gestaltete Sortiermaschinen verlangen für große Sortiermengen lange Aufstellflächen.

Die vorliegende Erfindung steht für die Gestaltung einer linearen Vorrichtung unter der Aufgabe, eine möglichst große Menge von unsortiert aufgegebenen Waren oder Einzelartikeln auf einer kurzen länglichen Strecke in Einheiten von verschiedenen Einzelartikeln so zusammenzuführen, dass die zusammengeführten Sammeleinheiten versandfertig sortiert zusammenkommen.

Die allgemeine erfinderische Lösung besteht darin, eine endlosen umlaufende Folge von mit ihrer Auflageseite oben bleibenden Einzelpaletten in zwei übereinanderliegenden und gegenläufigen Ebenen anzuordnen. Die Abgabestationen befinden sich in beiden Ebenen auf beiden Seiten, sodass längs der Vorrichtung auf jeder Seite vier Reihen von Sammelbehältern gefüllt werden.

Eine weitere Aufgabe besteht darin, die Vorrichtung weitgehend mechanisch betreiben zu können, wenngleich die Steuerung über einen Rechner erfolgt. Dafür ist erfindungsgemäß ein einziger Vortrieb vorgesehen, von dem alle Bewegungen vorteilhafterweise zwangssynchronisiert abgeleitet werden. Dies führt zu einer hohen Betriebssicherheit, auch bei einem hohem Durchsatz.

Weitere Einzelheiten, Merkmale und Vorteile der Erfindung ergeben sich aus den Ansprüchen und der nachfolgenden Beschreibung eines in der Zeichnung dargestellten Ausführungsbeispiels.

Es zeigen:
- Fig. 1 eine schematische Seitenansicht auf eine Sortiervorrichtung gemäß der Erfindung,
- Fig. 2 eine Draufsicht auf die Vorrichtung gemäß Fig. 1
- Fig. 3 einen Aufriss entlang der Linie III - III in Figur 1
- Fig. 4 in schematischer Perspektive im Detail eine einzelne Palette gemäß der vorliegenden Erfindung,
- Fig. 5 einen Aufriss entlang der Linie V - V in Fig. 4,
- Fig. 6 ein Detail gemäß der Markierung VI in Fig. 1 und
- Fig. 7 einen schematischen Schnitt entlang der Linie VII - VII in Figur 6.

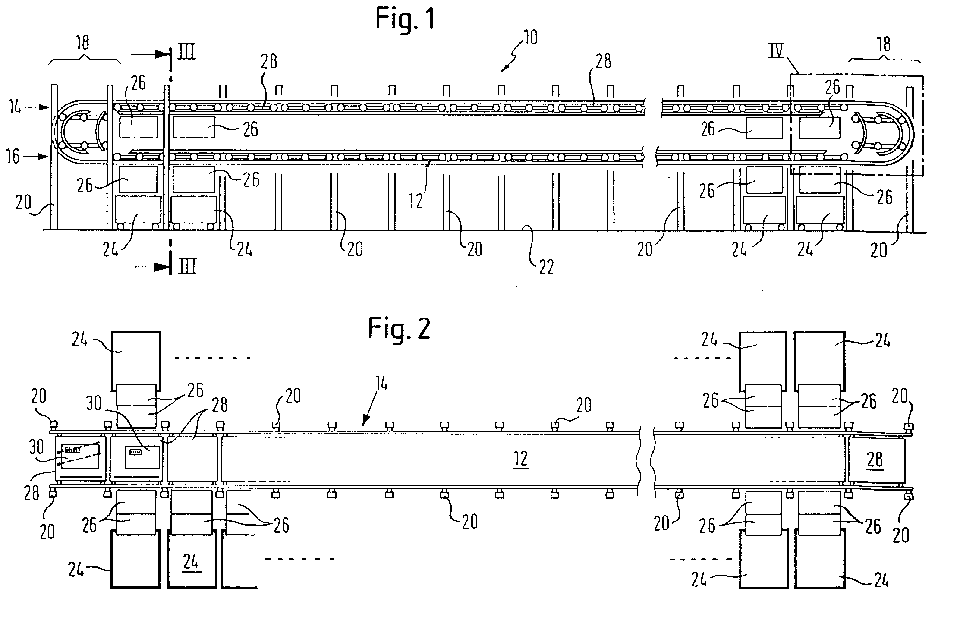

Mit Bezug auf Figuren 1 und 2 weist eine Sortiervorrichtung 10 eine endlose Reihe 12 von besonderen Einzelpaletten 28 auf, deren Einzelheiten weiter unten näher beschrieben werden. Die endlose Reihe 12 bewegt sich kontinuierlich in zwei Ebenen, einer oberen Ebene 14 und einer unteren Ebene 16 gegenläufig. Deshalb gibt es an beiden Enden der Reihen je einen Übergang 18 von der einen in die andere Ebene, in welcher die Einzelpaletten 28 ihre Ober- und Unterseiten beibehalten, also nicht vertauschen.

Die Sortiervorrichtung wird von im Abstand zueinander angeordneten Ständern 20 so abgestützt, dass beide Ebenen 14, 16 über dem Boden 22 erhöht sind. Diese Höhe ist so bemessen, dass Rollcontainer 24 unter Abwurfflächen oder Abgabestationen 26 passen, von denen die auf den Einzelpaletten 28 jeweils aufgelegten Güter, Waren oder Einzelartikel 30 durch Schwerkraft in die Rollcontainer rutschen können.

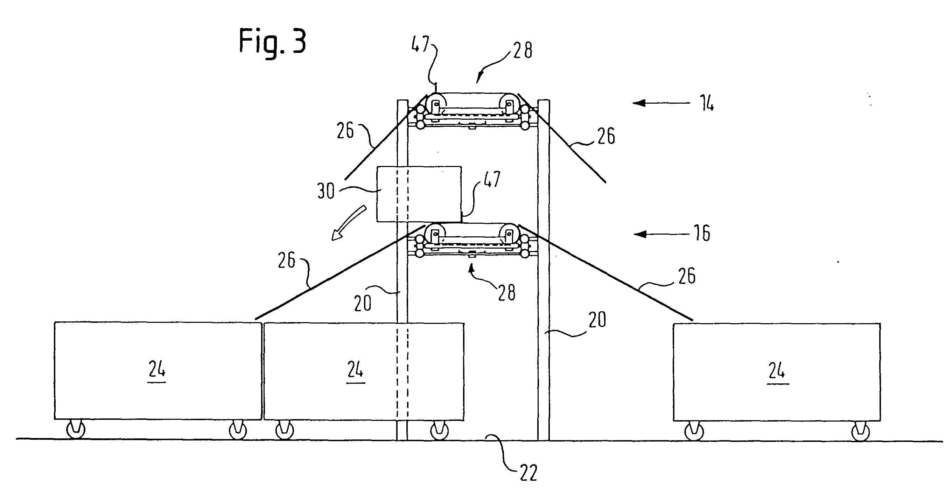

Dies wird aus Figur 3 anschaulich, aus der ersichtlich ist, wie ein verpackter Einzelartikel 30 gemäß eingezeichnetem Pfeil über eine Abwurffläche 26 von einer Einzelpalette 28 aus der unteren Ebene 16 in einen Rollcontainer 24 rutscht.

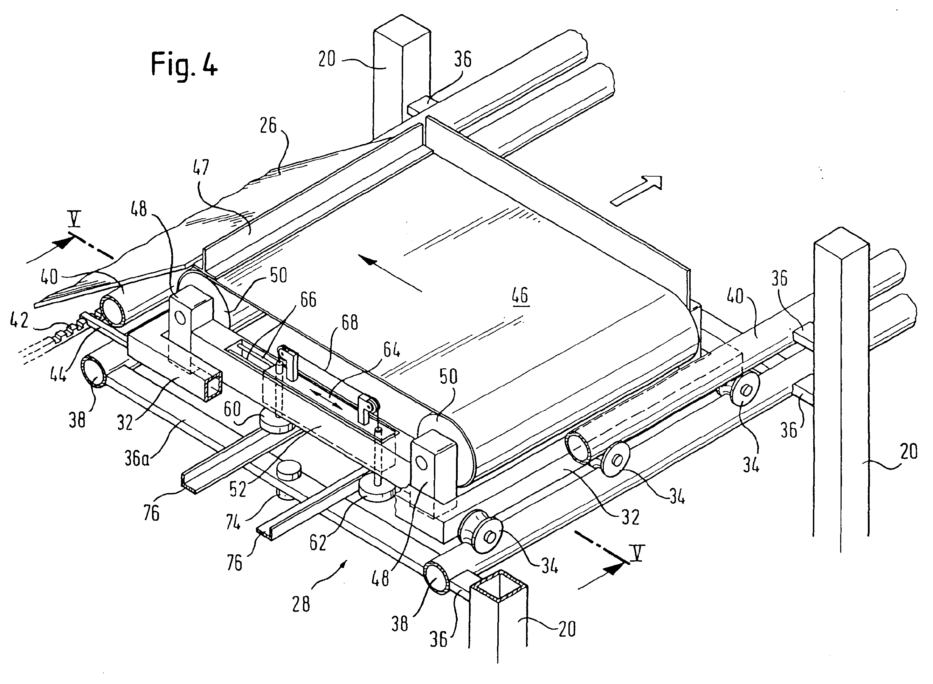

Weitere Einzelheiten ergeben sich aus der schematischen Perspektive in Figur 4, in welcher eine Einzelpalette 28 näher dargestellt ist. Jede Einzelpalette hat einen Rahmen 32, an welchem seitlich freilaufende Rollen 34 angebracht sind, mit denen sich die Palette 28 auf einem Paar Schienen 38 bewegt. Jede Palette 28 wird auf jeder Seite von zumindest zwei Rollen 34 getragen. Zweckmäßigerweise sind an jeder Palette 28 auf jeder Seite drei Rollen 34 angeordnet. Mit einem geringen, ein Spiel ermöglichenden Abstand befindet sich über den Rollen 34 auf jeder Seite eine zweite, obere Schiene 40. Im dargestellten Ausführungsbeispiel bestehen die Schienen 38,40 aus rundem Material, um Gewicht zu sparen aus Rohren. Es können aber auch andere Schienenformen und hieran angepasste Rollen verwendet werden. Die Schienen 38, 40 sind mit Streben 36 mit dem Aufbau der Stützen 20 fest verbunden. Besondere Streben 36a sind aus weiter unten erläuterten Gründen zwar über die Breite der Vorrichtung in regelmäßigen Abständen, aber gegenüber den Stützen 20 jeweils versetzt angeordnet.

Zumindest auf einer Seite läuft ein angetriebener Zahnriemen 42 um, der über einen Mitnehmer 44 jede Einzelpalette 28 längs den Schienen 38, 40 gleichmäßig bewegt. An Stelle des in diesem Beispiel dargestellten Zahnriemens 42 kann jedes andere flexible Zugmittel, wie eine Kette oder ein Seil oder ähnliches eingesetzt werden, um den endlosen Umlauf der Einzelpaletten 28 durch die beiden Ebenen 14 und 16 zu bewirken. Diese Zugmittel können auch auf beiden Seiten verlaufen.

Jede Einzelpalette 28 stellt für eine aufzulegende Ware oder Einzelartikel 30 als Auflage ein endloses Band 46 mit einem Abwerfer 47 zur Verfügung, das normalerweise in Ruhe über zwei auf Stützen 48 gelagerte Walzen 50 gespannt ist. Die Stützen 48 sind fest mit dem Rahmen 32 der Einzelpalette 28 verbunden. Die Bewegbarkeit des Bandes 46 dient dazu, eine aufgelegte Ware 30 an einer gewünschten Stelle über eine Abwurffläche 26 in einen der bereitstehenden Rollcontainer.24 abzugeben. Hierbei führt das Band 46 nach rechts oder links (Figuren 3,4 und 5) eine Bewegung aus, die der Breite zwischen den Walzen 50 entspricht.

Eine Besonderheit hierbei ist, dass diese Bewegung des Bandes 46 von der Bewegung der Einzelpalette 28 so abgeleitet wird, dass aus der Längsbewegung der Palette 28 längs den Schienen 38,40 eine kurze Bewegung des Bandes 46 erzeugt wird, die ausreicht, um eine Ware 30 zwischen den Ständern 20 sowohl in der oberen (14) als auch in der unteren Ebene 16 wahlweise nach rechts oder links abgeben zu können. Hierzu sind, wie aus den Figuren 1 und 2 hervorgeht, in jeder Ebene 14,16 auf jeder Seite der Vorrichtung Abgabestationen in Form von Abwurfflächen 26 vorgesehen. Die hier dargestellten Abwurfflächen 26 sind nur schematisch eingezeichnet. Je nach dem zu sortierenden Gut oder je nach Weiterverarbeitung der sortierten Güter können Röllchenbahnen oder Förderbänder an jeder Abgabestation 26 angeordnet sein.

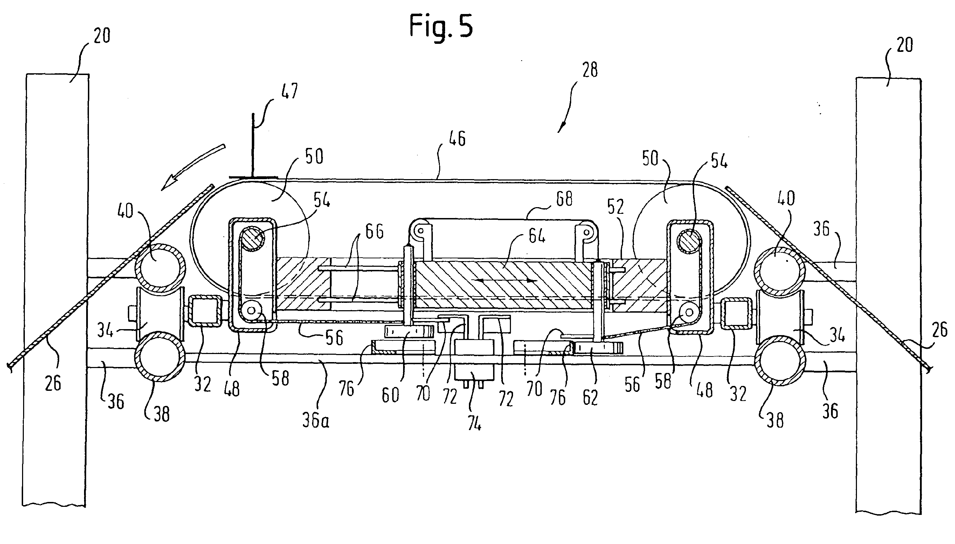

Zur näheren Erläuterung dieser Merkmale wird zusätzlich zur Figur 4 auf die schematische Darstellung der Figur 5 verwiesen. Aus dieser Darstellung ist ersichtlich, dass im vorliegenden Ausführungsbeispiel die vorstehend genannte grundsätzliche Idee sich dadurch verwirklichen lässt, dass jede der beiden Walzen 50, um die das Band 46 gespannt ist, auf einer Welle 54 sitzt, um die im Inneren der Stütze 48 ein Wickelzug 56 gewickelt ist, dessen Länge genau auf die erforderliche Größe der Bewegung des Bandes 46 nach rechts oder links abgeglichen ist und so für den Antrieb der einen oder anderen Walze sorgt. Hierbei zieht der eine Wickelzug 56 seinen Wickelvorrat von der einen Welle 54 ab und zieht damit das Band 46 in Richtung auf diese Walze 50. Diese beiden Wickelzüge 56 werden über je eine Umlenkrolle 58 auf der einen Seite für die eine Bewegungsrichtung auf eine in der Darstellung der Figur 5 linke Führungsrolle 60 bzw. auf eine rechte Führungsrolle 63 geführt und sind dort jeweils mit ihrem anderen Ende festgelegt. Die Wickelrichtung auf den beiden Wellen 54 ist gegenläufig. Der Antrieb der einen Rolle 50 erfolgt durch ein Abwickeln des einen Wickelzuges 56 von der dazugehörigen Welle 54. Zugleich wird auf der anderen Welle 54 über die Bewegung des Bandes 46 der Wickelzug auf 54 auf diese Welle 54 aufgewickelt und hierbei beispielsweise von der linken Führungsrolle 60 abgewickelt.

Der Antrieb geht hierbei von der rechten Führungsrolle 62 aus. Diese rollt zur Erzeugung der Abwurfbewegung einer Ware 30 vom bewegten Band 46 an einer auf zwischen zwei der unteren Streben 36a befestigten und in Laufrichtung der Paletten 28 ausgerichteten Leitschiene 76 ab und wickelt bei dieser Abrollbewegung den Wickelzug 56 in diesem Beispiel auf die Leitrolle 62 auf. Die Länge der Leitschiene 76 ist auf die Länge des Wickelzuges und die Bewegungsgröße des Bandes 46 abgestimmt, so dass am Ende der Leitschiene 76 die Wickelbewegung des Wickelzuges 56 und damit die seitliche Bewegung des Bandes 46 aufhört.

Die beiden Führungsrollen 60, 62 sind dreh- und achsbeweglich in einem Trägerkörper 64 gelagert. Dieser befindet sich in einem Hohlträger 52 zwischen zwei gegenüberliegenden Stützen 48. Es ist sichergestellt, dass immer nur eine Führungsrolle 60 oder 62 mit ihrer zugehörigen Leitschiene 76 in Abrollkontakt tritt. Dies ist in der Darstellung von Figuren 4 und 5 schematisch durch eine Kopplung 62 eingezeichnet. Dadurch wird erreicht, dass nur eine Bewegung des Bandes 46 in der einen oder anderen Richtung stattfindet.

Ob überhaupt eine Bewegung des Bandes 46 gegenüber einer Abwurfplatte 26 stattfindet oder ob die Einzelpalette 28 ohne eine Querbewegung auszuführen, vorbeigeführt wird, lässt sich über hier nur schematisch eingezeichnete Koppelglieder 70 verwirklichen, die den entsprechenden Führungsrollen 60,62 einer vorbei bewegten Palette 28 zugeordnet sind. Diese Koppelglieder 70 würden normalerweise, das heißt, wenn keine Abwurfbewegung des Bandes 46 ausgelöst werden soll, ohne Berührung mit Greifern 72 an der Station vorbeibewegt werden. Dafür ist auch der Trägerkörper 64 im Hohlbalken 52 beweglich. Soll aber eine Abwurfbewegung von der Bewegung der Paletten über eine Abwurfplatte ausgelöst werden, dann aktiviert an dieser Stelle auf der Strebe 36a ein fest angeordneter Elektromagnet 74 den entsprechenden Greifer 72, um in ein Koppelglied 70 einzugreifen, wie es beispielhaft in Figur 5 links dargestellt ist und zieht die Führungsrolle 60 in einen Eingriff mit der entsprechenden Leitschiene 76. Wenn dann die Führungsrolle 60 an der Leitschiene 76 abrollt, wickelt sich der Wickelzug 56 von der linken Welle 54 ab, auf die linke Führungsrolle 60 auf, und das Band 46 führt die Querbewegung in Richtung des links eingezeichneten Pfeils aus. Zugleich ist die rechte Führungsrolle 62 angehoben und bewegt sich berührungslos an ihrer Leitschiene 76 vorbei.

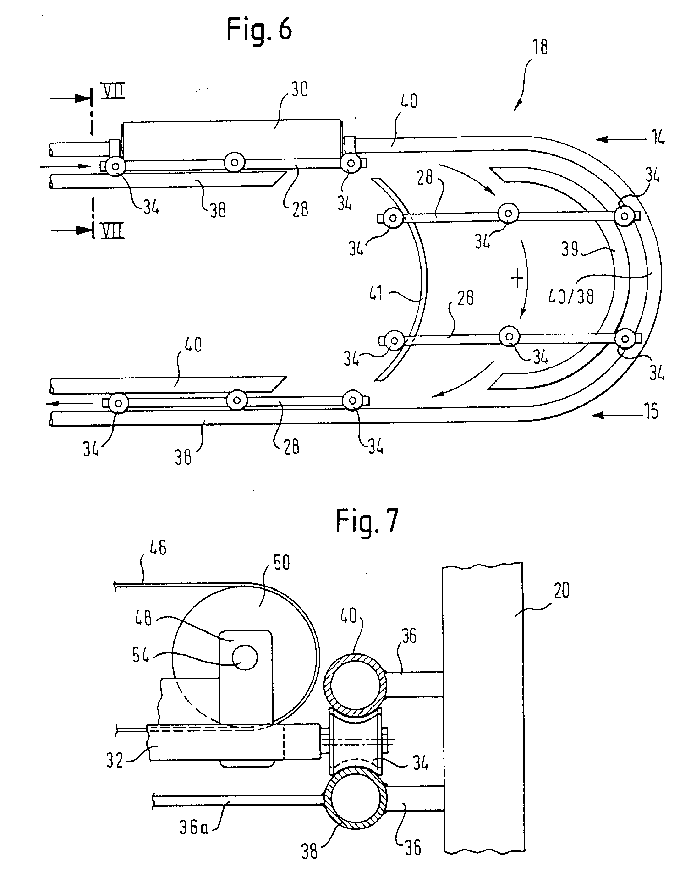

Ein wesentliches Merkmal der Erfindung ist, dass zwei Ebenen genutzt werden, um die Sortierkapazität zu erhöhen. Deshalb sind die beiden Übergänge 18 an beiden Enden der Vorrichtung so ausgebildet, dass das Gut oder die Ware 30 auch beim Übergang von einer Ebene 14, 16 in die andere Ebene oben auf der Einzelpalette verbleibt. Ein Ausführungsbeispiel, um dieser Forderung gerecht zu werden, ist in Figuren 6 und 7 schematisch dargestellt.

Jede Palette 28 hat, wie oben erwähnt auf jeder Seite zumindest zwei Rollen 34, vorzugsweise jedoch drei Rollen 34. Beim Übergang von der oberen Ebene 14 in die untere Ebene 16 gemäß den in Figur 6 eingezeichneten Pfeilen wird jede Palette 28 mindestens an vier Punkten unterstützt. Zweckmäßigerweise sollten jedoch bei Verwendung von drei Rollen 34 auf jeder Seite über den überwiegenden Anteil der Übergabebewegung eine Unterstützung an sechs Punkten erfolgen, auch wenn in der Zeichnung schematisch nur Unterstützungen im äußeren Bogen eingezeichnet sind. Wie oben schon erwähnt, laufen die Rollen 34 auf den jeweils stützenden, also den unteren Schienen 38, während zu den oberen Schienen 40 ein Spiel frei ist. In der Übergangsstation 18 wechselt die Funktion der durchgehenden Schiene von der oberen Schiene 40 zur unteren Schiene 38 und so erfolgt auch der Übergang zur Abstützungsfunktion. In der ersten Phase der Umlenkung erfolgt eine Übergang der oben in Bewegungsrichtung vorderen Rolle 34 und eine Abstützung durch eine innere Schiene 39. Bei Verwendung der Vorrichtung für nur leichte Güter genügt es nur für die in der oberen Ebene 14 hinteren Rollen 34 einen Hilfsbogen 41 vorzusehen. Um jedoch für mittlere und schwere Güter eine Kippsicherheit zu gewährleisten, lassen sich die Abstützungen für die oben hinteren und sogar auch stets in der Mitte laufenden Rollen 34 mit doppelten Schienen 38,39,40,41 ausführen.

Die Kippsicherheit in diesem Wendebereich des Überganges 18 ist an beiden Enden auch deshalb wichtig, weil hier die Güter oder Waren im Betrieb der Vorrichtung aufgelegt werden. Im Betrieb können mehre Vorrichtungen der beschriebenen Art nacheinander zum Vorsortieren und zum versandfertigen Nachsortieren angeordnet werden. Die aufgelegten Güter oder Waren 30 sind für Computer lesbar etikettiert oder mit einem optisch erkennbaren Pickeretikett versehen und können deshalb auf eine Einzelpalette 28 in beliebiger Reihenfolge aufgelegt werden. Im angeschlossenen Rechner wird diese Zuordnung, welches Gut 30 auf welcher Einzelpalette 28 abgelegt worden ist, abgespeichert. Der Rechner ordnet die verschiedenen Güter oder Waren 30, die zu einer Kombination oder Sendung zusammengestellt werden sollen, einer bestimmten Abwurfstation (26)zu und aktiviert beim Umlauf der Paletten diese bestimmte Abwurfstation (26) durch Betätigen des entsprechenden Elektromagneten 74.

Durch die vorteilhafte Verwendung von zwei übereinanderliegenden Ebenen können in einem praktischen Beispiel auf kurzer Baulänge von beispielsweise etwa 20 m 2 x 60 = 120 Abwurfstationen für 2 x 60 "Waren" 30 im Abstand von je untereinander ca. je 65 cm vorgesehen werden, was bei einer Bandlaufgeschwindigkeit von etwa 1,2 m/sec eine Sortierkapazität von ca. 2400 "Waren" 30 pro Stunde ergibt. Unter "Waren" 30 können hierbei Einzelstücke oder bereits vorsortierte mehrere Einzelstücke sein.

### [Bezugszeichenliste ]

- 10: Sortiervorrichtung (allgemein)
- 11: ...
- 12: endlose Reihe von Paletten (28)
- 13: ...
- 14: obere Ebene
- 15: ...
- 16: untere Ebene
- 17: ....
- 18: Übergang von einer zur anderen Ebene
- 19: ...
- 20: Ständer
- 21: ..
- 22: Boden
- 23: ..
- 24: Rollcontainer
- 25: ...
- 26: Abwurfflächen, Abgabestation
- 27: ....
- 28: Einzelpalette, Palette
- 29: ...
- 30: aufgelegte Ware, Einzelartikel
- 31: ....
- 32: Paletten Rahmen
- 33: ....
- 34: Rollen
- 35: ...
- 36: Streben (Aufbau stehende Vorrichtung 10)
- 36: a Querstrebe über Breite von 10
- 37: ....
- 38: untere Schiene
- 39: äußere Umlenkschiene
- 40: obere Schiene
- 41: innere Umlenkschiene
- 42: Zahnriemen
- 43: ....
- 44: Mitnehmer
- 45: .....
- 46: endloses Band als Träger für 30

- 47: Abwerfer
- 48: Stütze (auf Rahmen 32, zur Stütze von 50)
- 49: ...
- 50: Walzen (als Träger von 46 und in wechselnder Richtung antreibbar)
- 51: ....
- 52: Hohlträger (zwischen 48)
- 53: ....
- 54: Welle (trägt 50)
- 55: ...
- 56: Wickelzug
- 57: ....
- 58: Umlenkrolle
- 59: .....
- 60: linke Führungsrolle
- 61: ....
- 62: rechte Führungsrolle
- 63: .....
- 64: Trägerkörper(für Führungsrollen und in 52 längsbeweglich)
- 65: ....
- 66: Führungsschienen (für 64)
- 67: ....
- 68: Kopplung (zwischen 60 u. 62)
- 69: ....
- 70: Koppelglieder
- 71: .....
- 72: Greifer
- 73: .....
- 74: Elektro- Schaltmagnet
- 75: .....
- 76: Leitschiene (auf 36 befestigt und zum abgreifen der Querbewegung)

## Patentansprüche

1. Vorrichtung zum Sortieren und Zusammenstellen von markierten Einzelartikeln (30)in versandfertige Einheiten mittels einer linearen endlosen umlaufenden Folge (12) von mit ihrer Auflageseite oben bleibenden Einzelpaletten (28) in zwei übereinanderliegende und gegenläufige Ebenen (14,16), in denen sich beidseitig Abgabestationen (26) befinden, in welche die Einzelartikel (30) von den Einzelpaletten (28) dadurch abgegeben werden, dass von einem an jeder Abgabestation (26) angeordneten Signalgeber (76) ein Signal an die vorbeibewegte Einzelpalette (28) gegeben wird, worauf ein auf einem auf jeder Einzelpalette (28) angeordneten endlosen Band (46) aufliegender Einzelartikel (30) durch eine Querbewegung des Bandes (46) entsprechend der Markierung den Einzelartikel (30) in eine der beidseitigen Abgabestationen (26) abgibt.

2. Vorrichtung nach Anspruch 1, dadurch gekennzeichnet, dass jede Einzelpalette (28) beidseitig mit freilaufenden profilierten Rollen (34) zwischen entsprechend gegenprofilierten Schienen (38,40) von Zugmitteln (42) gezogen läuft, wobei in der einen Ebene (14) die Rollen (34) auf unteren Schienen (38) aufliegen, welche in zwei an beiden Enden der Vorrichtung (10) befindlichen Übergängen (18) von einer Ebene (14) zur anderen Ebene (16) zu oberen Schienen (40) werden, während die zuvor oberen Schienen (40) zu unteren Schienen werden.

3. Vorrichtung nach Anspruch 2, dadurch gekennzeichnet, dass jede Einzelpalette (28) beidseitig mindestens zwei, vorzugsweise drei Rollen (34) hat.

4. Vorrichtung nach Anspruch 2, dadurch gekennzeichnet, dass das Zugmittel (42) ein einseitig oder beidseitig angeordneter und angetriebener endloser Zahnriemen, Seilzug, Kette oder ein ähnliches Zugelement ist, das über Mitnehmer (44) mit jeder Einzelpalette (28) verbunden ist.

5. Vorrichtung nach Ansprüchen 1 bis 4, dadurch gekennzeichnet, dass jede Einzelpalette (28) während des Überganges von einer Ebene (14,16) zur anderen Ebene stets mit mindestens vier Rollen (34), vorzugsweise jedoch mit stets sechs Rollen in Schienen (38,39,40,41) geführt ist (Fig. 6).

6. Vorrichtung nach Anspruch 5, dadurch gekennzeichnet, dass beim Übergang (18) die Funktion der oberen Schiene (40) direkt in die der unteren Schiene (38) und umgekehrt übergeht.

7. Vorrichtung nach Ansprüchen 5 und 6, dadurch gekennzeichnet, dass im Bereich des Übergangs (18) abschnittweise Stützschienen (39,41) angeordnet sind.

8. Vorrichtung nach Ansprüchen 1 bis 3, dadurch gekennzeichnet, dass jede Einzelpalette (28) die Querbewegung des Bandes (46) während der Bewegung vorbei an einer Abgabestation (26) von dieser Bewegung elektromagnetisch ausgelöst mechanisch übernommen wird.

9. Vorrichtung nach Anspruch 8, dadurch gekennzeichnet, dass auf jeder Einzelpalette (28) ein endloses Band (46) als Träger für einen aufgelegten Einzelartikel(30) zwischen zwei in der Einzelpalette (28) gelagerten Walzen (50) aufgespannt ist, die sich bei Aktivierung (70,72,74) einer Kopplung (60,62,70) an die Vorbeibewegung der Palette (28) an einer Abgabestation (26)in je eine Richtung um die Breite der Auflagefläche des Bandes (46) bewegen lassen.

10. Vorrichtung nach einem oder mehren der voraufgehenden Ansprüche, dadurch gekennzeichnet, dass die Vorrichtung (10) über dem Boden (22) mittels Ständer (20) derart erhöht aufgestellt ist, dass die Einzelartikel (Waren, 30) sich unter Schwerkraft an den Abgabestationen (26) weiterbefördern lassen.
